# EUROPEAN PATENT SPECIFICATION

(11) **EP 1 416 345 B1**
(45) Date of publication and mention of the grant of the patent: **19.09.2007**
(21) Application number: 03024876.9
(22) Date of filing: 31.10.2003
(51) Int. Cl.: G05B 19/416

(54) **Filter device for machine controller**
Filtereinrichtung für eine Maschinensteuerung
Circuit filtrant pour la commande d'une machine

(30) Priority: 31.10.2002 JP 2002318090
(43) Date of publication of application: 06.05.2004
(73) Proprietor: KABUSHIKI KAISHA YASKAWA DENKI, Kitakyushu-Shi, Fukuoka 806-0004 (JP)
(72) Inventor: Masumoto, Hiroo, Kitakyushu-shi Fukuoka 806-0004 (JP); Hashimoto, Youichi, Kitakyushu-shi Fukuoka 806-0004 (JP)
(74) Representative: Grünecker, Kinkeldey, Stockmair & Schwanhäusser Anwaltssozietät

(56) References cited:
- US-A- 3 510 737
- US-A- 4 706 003
- US-B1- 6 208 687
- PATENT ABSTRACTS OF JAPAN vol. 2002, no. 03, 3 April 2002 (2002-04-03) -& JP 2001 306118 A (MITSUBISHI ELECTRIC CORP), 2 November 2001 (2001-11-02)

## Description

The present invention relates to a filter device used to process positioning commands for a machine controller, so that the vibration of a mechanical system during acceleration and deceleration is suppressed.

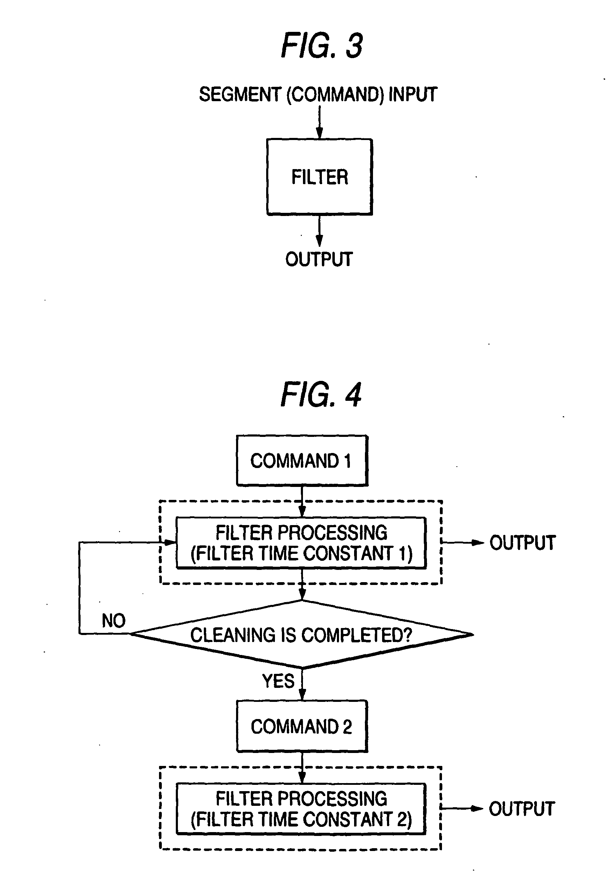

Conventionally, a segment filter (moving average filter) is known as a software function for suppressing the vibration of a mechanical system during acceleration and deceleration and for smoothly rotating a motor in a machine controller used in a positioning apparatus or the like. Fig. 3 is a block diagram of a conventional segment filter, and Fig. 4 is a flowchart illustrating an operating procedure at the time of changing a time constant of that filter.

As shown in Fig. 3, the conventional filter is comprised of input and output units and a single filter. A procedure is adopted in which inputted segments are consecutively subjected to filter processing and outputted by software (e.g., JP-A-2001-306118).

However, with the conventional segment filter, when continuous input commands are inputted to effect positioning, the following two methods are adopted to change over the filter constant without causing positional error.
(1) The operation waits for completion of the clearing of a previous filter.
(2) The remaining amount of the filter is outputted at a stroke.

However, with the method (1), there is a problem in that since there is the time for waiting for completion of the clearing of the previous filter at the time of changing the time constant of a filter, the tact time becomes long in proportion to the time constant of the filter. With the method (2), since all the commands in a buffer of the filter are outputted at a stroke, a command of an extremely large value is outputted in a single command, so that the filter output ceases to be smooth. Hence, there has been a problem in that damage is imparted to a machine which is controlled by such a command.

The invention has been devised in view of the above-described various problems, and its object is to provide a filter device which is capable of reducing an increase in the tact time entailed by the change of a time constant of the filter without causing positional error, and of making the filter output smooth.

The above and other objects of the invention are achieved by a filter device according to claim 1.

By virtue of the characteristic features of the invention, it is possible to change the filter time constant without waiting for completion of the clearing of the previous filter, and the motor can be rotated smoothly.
Fig. 1 is a block diagram illustrating the configuration of a filter device for a machine controller in accordance with the invention;
Fig. 2 is a flowchart illustrating a processing procedure of the method in accordance with the invention;
Fig. 3 is a block diagram illustrating the configuration of a filter of a conventional machine controller;
Fig. 4 is a flowchart illustrating the operating procedure of the conventional filter; and
Fig. 5 is a diagram illustrating the effect of the invention.

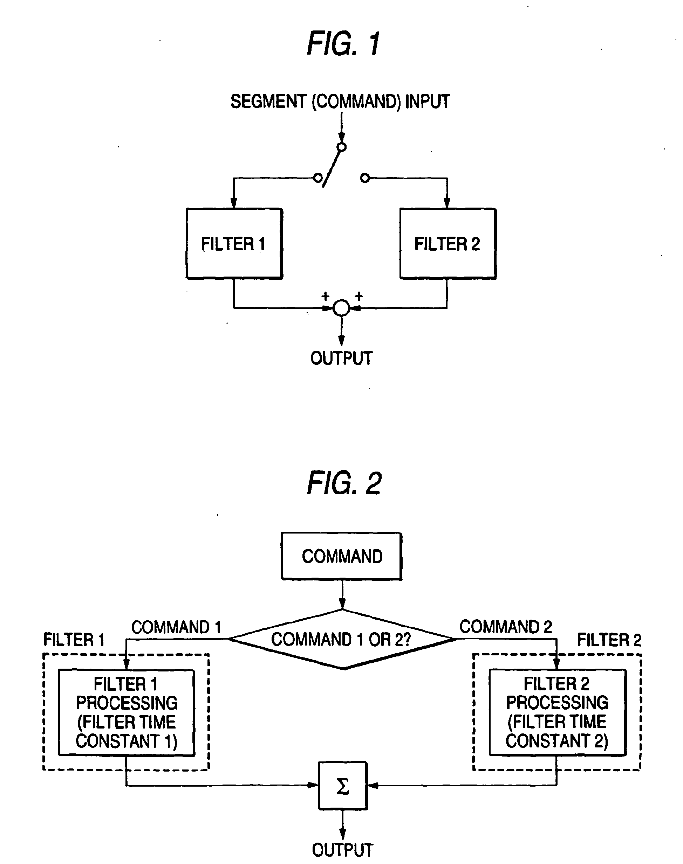

Hereafter, a description will be given of an embodiment of the invention with reference to the drawings. Fig. 1 is a block diagram illustrating the configuration of a filter device for a machine controller in accordance with the invention. As shown in the drawing, the filter device for the machine controller of the invention is comprised of input/output units, a switch for changing over the input, and a plurality of independent filters. In the drawing, a plurality of independent filters are used for filter processing which is conventionally performed by a single filter, and a changeover of the filter time constant is realized by changing over the input to a filter for which the clearing of the filter has been completed.

Fig. 2 is a flowchart illustrating a processing procedure in the filter device of the machine controller shown in Fig. 1. Referring to Figs. 1 and 2, a description will be given in order by citing an example in which the filter device of the machine controller of the invention comprises two filters. In this example, the filter processing is effected with a filter time constant 1 which refers to a command 1, and the filter processing is also effected with a filter time constant 2 which refers to a command 2, while command 1 and command 2 are processed. When the command 1 is inputted in the filter device, a segment of command 1 is inputted to the filter 1 having the filter time constant 1, thereby effecting filter processing 1. When the clearing of the command 1 is completed, and the command 2 is inputted in the filter device, the segment input is changed over, and the segment of command 2 is inputted to the filter 2 having the filter time constant 2, thereby effecting filter processing 2. At that juncture, the segment of command 2 is not inputted to the filter 1, but filter processing is continued until the remaining amount of segments in the filter becomes 0. Then, the sum of the segments processed by the filters 1 and 2 is outputted.

Thus, even if there is a remaining amount of segments in the filter 1, the filter time constant can be changed by making a changeover to the filter 2 without waiting for completion of the clearing of the filter 1 and without clearing the remaining amount of the segments in the filter at a stroke. In addition, since the sum of the segments processed by the filters 1 and 2 is outputted, filter processing is made possible without causing positional error.

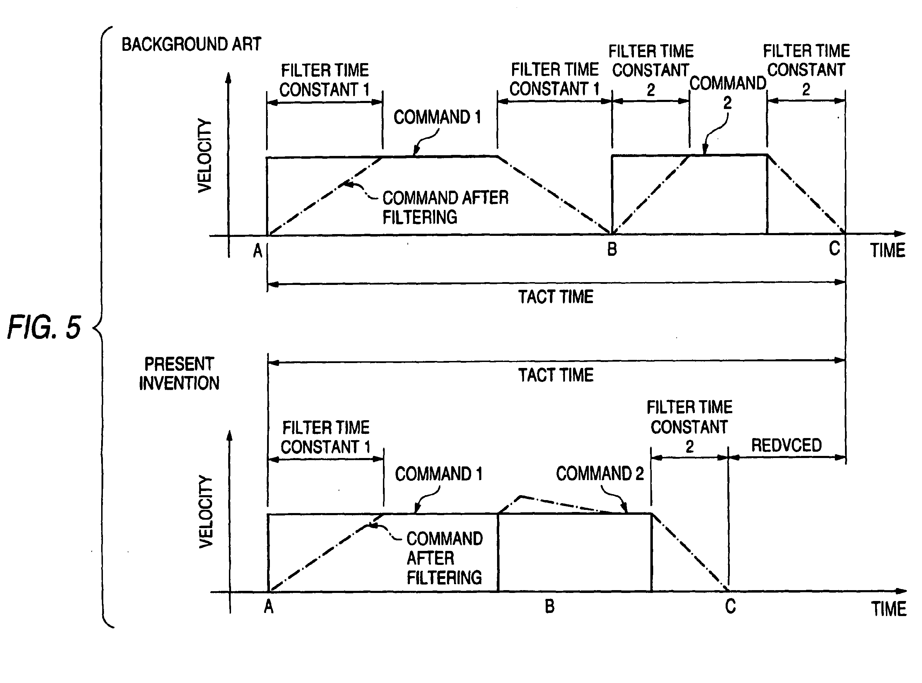

Fig. 5 is a diagram illustrating an effect of the invention, in which a comparison is made in the tact time between the conventional filter processing and the filter processing to which the method of the invention is applied in a case where moderate acceleration and deceleration are effected from a point A to a point B (filter time constant is large), and sharp acceleration and deceleration are effected from the point B to a point C (filter time constant is short) . It can be appreciated from the drawing that the tact time can be reduced by using the filters to which the method of the invention is applied as compared with the conventional case.

As described above, according to the method of the invention, a procedure is adopted in which the input is changed over by using a plurality of independent filters. Therefore, advantages are offered in that an increase in the tact time entailed by the change of the filter time constant, which has been a problem of the conventional segment filter, can be reduced without causing positional error, and that the filter output can be made smooth, so that useless damage ceases to be imparted to the machine.

## Claims

1. A filter device used to process positioning commands for a machine controller, so that the vibration of a mechanical system during acceleration and deceleration is suppressed, **characterised in that** it comprises :
two independent filters whose filter time constants differ;
a changeover switch for changing over first and second commands inputted to the filter device such that the first command is inputted to the first filter and the second command to the second filter; and
an adder for adding outputs of the two filters to form the output of the filter device.

## Patentansprüche

1. Filtervorrichtung, die verwendet wird, um Positionier-Befehle für eine Maschinen-Steuereinheit so zu verarbeiten, dass die Schwingung eines mechanischen Systems bei Beschleunigung und Abbremsung unterdrückt wird, **dadurch gekennzeichnet, dass** sie umfasst:
zwei unabhängige Filter, deren Filterzeitkonstanten sich unterscheiden;
einen Umschalter zum Umschalten erster und zweiter Befehle, die in die Filtervorrichtung eingegeben werden, so dass der erste Befehl in das erste Filter und der zweite Befehl in das zweite Filter eingegeben wird; und
ein Addierer zum Addieren von Ausgängen der zwei Filter, um den Ausgang der Filtervorrichtung zu erzeugen.

## Revendications

1. Dispositif de filtrage utilisé pour traiter des commandes de positionnement pour un contrôleur de machine, de sorte que la vibration d'un système mécanique pendant l'accélération et le ralentissement est supprimée, **caractérisé en ce qu'**il comprend :
deux filtres indépendants dont les constantes de temps de filtre diffèrent ;
un commutateur pour changer les première et seconde commandes introduites dans le dispositif de filtrage, de sorte que la première commande est introduite dans le premier filtre et la seconde commande dans le second filtre ; et
un additionneur pour ajouter des sorties des deux filtres afin de former la sortie du dispositif de filtrage.
